# EUROPEAN PATENT APPLICATION

(11) **EP 4 779 564 A1**
(43) Date of publication of application: **22.07.2026**
(21) Application number: 26150327.0
(22) Date of filing: 06.01.2026
(51) Int. Cl.: G06T 7/20

(54) **INFORMATION PROCESSING APPARATUS, METHOD FOR CONTROLLING INFORMATION PROCESSING APPARATUS, AND PROGRAM**

(30) Priority: 20.01.2025 JP 2025007899
(71) Applicant: Canon Kabushiki Kaisha, Tokyo, 146-8501 (JP)
(72) Inventor: IGARASHI, Yuma, Tokyo, 146-8501 (JP)
(74) Representative: Canon Europe Limited

(57) **Abstract**

An information processing apparatus (100, Figure 2) includes an image acquisition unit (140, Figure 3) configured to acquire an image (510, 520, 530) acquired by imaging a subject, a detection unit (150, Figure 3) configured to detect a subject region (501) from the image, the subject region being a region of the subject being a tracking target, and a setting unit (170, Figure 3) configured to set the subject region of the subject being the tracking target based on a likelihood of the subject in a case where at least a portion of the subject is occluded by an obstruction (540) in the image and the plurality of subject regions (501, 502) of the subject is detected by the detection unit.

## Description

### Technical Field

The present disclosure relates to an information processing apparatus, a method for controlling the information processing apparatus, and a program.

### BACKGROUND

In conventional technology, a method is widely known in which a user acquires a desired video image (image) by remotely operating a camera from a console apparatus. For example, a video image (image) of an aircraft shown on television news is captured by remotely operating a camera platform apparatus including a camera that is permanently installed on the roof of an airport from a broadcasting station. Further, there is an automatic tracking and imaging system in which the camera platform apparatus equipped with image recognition technology recognizes a subject in a video image (image) and tracks the subject by automatically panning, tilting, and zooming the camera in response to the movement of the subject. This makes it possible to capture an image of a moving subject, such as an aircraft, while automatically tracking the subject without requiring the user to operate the console apparatus.

Further, the automatic tracking and imaging system described above may use a technique for enhancing the performance of automatic tracking. In recent years, for example, a technique using machine learning and artificial intelligence (hereinafter, referred to as "Al") is known as the image recognition technology described above, and an automatic tracking and imaging system using machine learning and Al is capable of performing subject detection (object detection) with high accuracy.

However, for example, an obstruction may pass in front of the tracking target subject, which may result in a situation where the tracking target subject is lost and is no longer within a desired angle of view (hereinafter, referred to as "loss"). In this regard, Japanese Patent Laid-Open Publication Nos. 2015-104050 and 2006-311099 describe techniques for stably performing automatic tracking while reducing incorrect decisions even in a case where there is an obstruction during subject tracking and imaging.

Specifically, Japanese Patent Laid-Open Publication No. 2015-104050 describes a technique that decreases a threshold for the degree of certainty of subject detection (object detection) while an obstruction is passing in front of a subject, thereby facilitating recognition of the subject compared with a normal time at which no obstruction passes in front of the subject. The technology described in Japanese Patent Laid-Open Publication No. 2015-104050 is premised on continuous detection of the automatically tracked subject without loss. Thus, the technique described in Japanese Patent Laid-Open Publication No. 2015-104050 may experience loss of the tracking target subject in a case where, for example, an obstruction passes in front of the tracking target subject and occludes a portion of the subject and a split occurs in which a plurality of subject regions appears with the obstruction in between.

Further, Japanese Patent Laid-Open Publication No. 2006-311099 describes a technique in which in a case where a moving object (subject) that is a tracking target overlaps a specific region (obstruction), different processes for detecting the moving object (subject) are used for the inside and outside the specific region. However, the technique described in Japanese Patent Laid-Open Publication No. 2006-311099 may experience loss of the tracking target subject in a case where, for example, an obstruction passes in front of the tracking target subject and occludes a portion of the subject and a split occurs in which a plurality of subject regions appears with the obstruction in between.

### SUMMARY

The present disclosure is in view of the above-described issues and is directed to reducing loss of a tracking target subject even in a case where at least a portion of the tracking target subject is occluded by an obstruction and a plurality of subject regions of the subject is detected.

The present disclosure in its first aspect provides an information processing apparatus as specified in claim 1. Optional features are specified in claims 2 to 7. The present disclosure in its second aspect provides a method for controlling an information processing apparatus as specified in claim 8. The present disclosure in its third aspect provides a program as specified in claim 9. Optional features of the second aspect and third aspect of the present disclosure are specified in or derived from claims 2 to 7.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a schematic configuration of an automatic tracking and imaging system according to a first embodiment.
Fig. 2 is a diagram illustrating an example of a hardware configuration of each apparatus of the automatic tracking and imaging system according to the first embodiment.
Fig. 3 is a diagram illustrating an example of a software configuration of each apparatus of the automatic tracking and imaging system according to the first embodiment.
Fig. 4 is a diagram illustrating an example of a process of detecting a tracking target subject and a misidentified obstruction performed by a tracking target detection unit of an information processing apparatus according to the first embodiment using a trained model generated by a training unit.
Fig. 5 is a diagram illustrating an example of a process in which the information processing apparatus according to the first embodiment performs automatic tracking of an aircraft being the tracking target subject.
Fig. 6 is a flowchart illustrating an example of a processing procedure in a method for controlling the information processing apparatus according to the first embodiment.
Fig. 7 is a diagram illustrating an example of a process in which the information processing apparatus according to the second embodiment performs automatic tracking of an aircraft being the tracking target subject.
Fig. 8 is a flowchart illustrating an example of a processing procedure in a method for controlling the information processing apparatus according to the second embodiment.
Fig. 9 is a diagram illustrating an example of an image at a time when an obstruction according to the third embodiment is within a screen of a camera.
Fig. 10 is a diagram illustrating a first example process in which the information processing apparatus according to the third embodiment performs automatic tracking of an aircraft being the tracking target subject.
Fig. 11 is a diagram illustrating a second example process in which the information processing apparatus according to the third embodiment performs automatic tracking of an aircraft being the tracking target subject.

### DESCRIPTION OF THE EMBODIMENTS

Forms (embodiments) for carrying out the present disclosure will be described with reference to the drawings.

### First Embodiment

First, a first embodiment will be described.

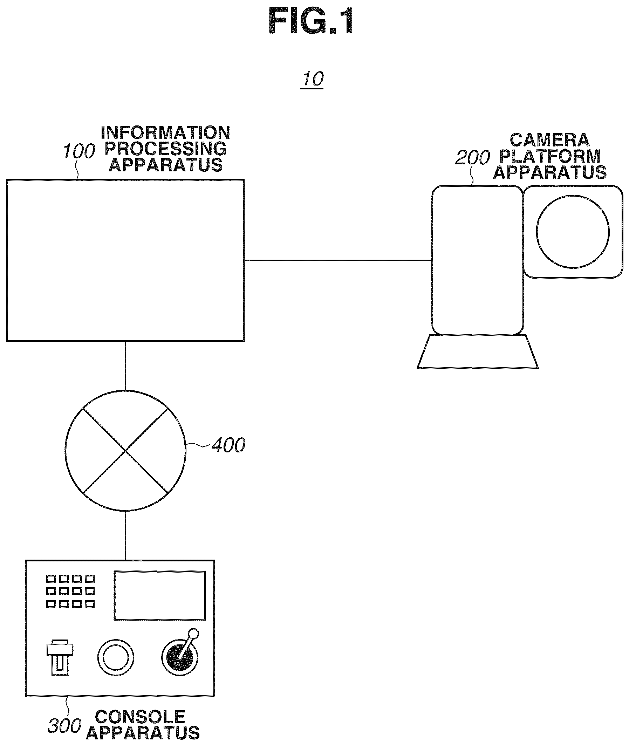

Fig. 1 is a diagram illustrating an example of a schematic configuration of an automatic tracking and imaging system 10 according to the first embodiment. As illustrated in Fig. 1, the automatic tracking and imaging system 10 includes an information processing apparatus 100, a camera platform apparatus 200, a console apparatus 300, and a network 400.

The information processing apparatus 100 controls the entire operation of the automatic tracking and imaging system 10. The camera platform apparatus 200 includes a camera configured to capture an image of a tracking target subject. Further, the camera platform apparatus 200 performs subject tracking and imaging by controlling the pan, tilt, and zoom of the camera under the control of the information processing apparatus 100. The console apparatus 300 is operated by a user to remotely manipulate the camera platform apparatus 200 or perform other manipulations. An operation input to the console apparatus 300 is input to the information processing apparatus 100 via the network 400. The network 400 connects the information processing apparatus 100 and the console apparatus 300 so that the information processing apparatus 100 and the console apparatus 300 can communicate with each other. The network 400 is a communication line, such as a public telephone line or the Internet.

According to the present embodiment, in a case where the user operates the console apparatus 300, an instruction corresponding to the operation is transmitted to the camera platform apparatus 200 via the network 400 and the information processing apparatus 100.

The camera platform apparatus 200 performs control based on the instruction corresponding to the user operation, thereby allowing the user to remotely manipulate the camera platform apparatus 200. A video image (image) captured by the camera of the camera platform apparatus 200 is input to the information processing apparatus 100. Then, the information processing apparatus 100 performs various calculation and recording processes necessary for automatic tracking and imaging on the image input by the camera platform apparatus 200. For example, the camera platform apparatus 200 and the information processing apparatus 100 are installed at sites such as airports, steel towers, or on the roofs of television stations, and the console apparatus 300 is installed inside a television station or similar locations. The present embodiment will describe an example assuming a case where the camera platform apparatus 200 and the information processing apparatus 100 are installed at an airport and an aircraft is the tracking target subject during automatic tracking and imaging.

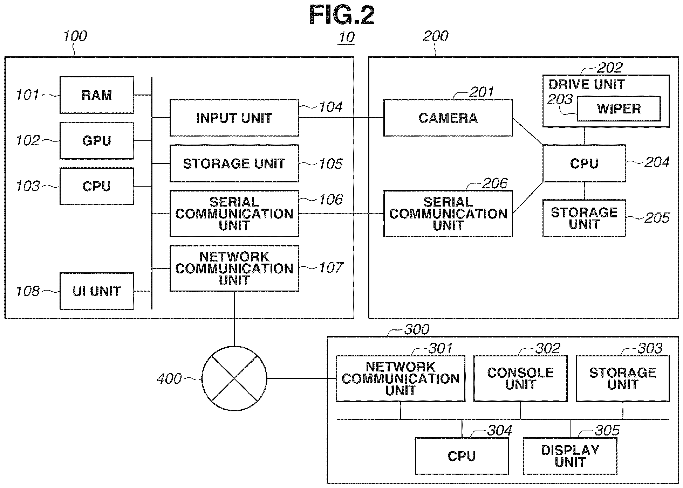

Fig. 2 is a diagram illustrating an example of a hardware configuration of each apparatus of the automatic tracking and imaging system 10 according to the first embodiment. In Fig. 2, each component corresponding to a component in Fig. 1 is assigned the same reference numeral, and detailed descriptions thereof are omitted.

First, a hardware configuration of the information processing apparatus 100 will be described.

As illustrated in Fig. 2, the information processing apparatus 100 has a hardware configuration including a random access memory (RAM) 101, a graphics processing unit (GPU) 102, a central processing unit (CPU) 103, an input unit 104, a storage unit 105, a serial communication unit 106, a network communication unit 107, and a user interface (UI) unit 108.

The RAM 101 is a volatile memory and used as a main memory and temporary memory area, such as a working area, for the CPU 103. The GPU 102 can efficiently perform calculations by processing more data in parallel. Thus, in the case of performing machine learning a plurality of times using a training model with a large number of parameters, such as deep learning, it is effective to execute processing using the GPU 102. The CPU 103, for example, controls each component of the information processing apparatus 100 based on a program stored in the storage unit 105 using the RAM 101 as a working memory and performs various types of control and processes of the information processing apparatus 100.

The input unit 104 is an interface for inputting information (such as image data from the camera platform apparatus 200) from an external apparatus to the information processing apparatus 100, and examples include various communication interfaces, such as a universal serial bus (USB) communication interface. The storage unit 105 is a non-volatile memory, such as a hard disk drive (HDD) or flash memory. The storage unit 105 stores image data, other data, a program executed by the CPU 103 to perform various types of control and processes of the information processing apparatus 100 and the like in their predetermined areas. Further, the storage unit 105 stores various data acquired by the CPU 103 by performing various types of control and processes of the information processing apparatus 100 and other data. The serial communication unit 106 is an interface for performing serial communication with the camera platform apparatus 200 under the control of the CPU 103. The network communication unit 107 is an interface for performing communication with the console apparatus 300 via the network 400 under the control of the CPU 103. The UI unit 108 is a user interface for receiving an operation input from the user operating the information processing apparatus 100 and displaying information about the information processing apparatus 100 to the user. The UI unit 108 can be operated using, for example, a keyboard, mouse, or display touch panel.

Next, a hardware configuration of the camera platform apparatus 200 will be described.

As illustrated in Fig. 2, the camera platform apparatus 200 has a hardware configuration including a camera 201, a drive unit 202, a CPU 204, a storage unit 205, and a serial communication unit 206. Further, the drive unit 202 includes a wiper 203.

The camera 201 is an image capturing unit configured to capture the surrounding area of the camera platform apparatus 200 and capture a motion image of the tracking target subject under the control of the CPU 204. The camera 201 includes an optical zoom lens with variable image magnification, and by driving the optical zoom lens based on a zoom control instruction from the CPU 204, optical zoom can be performed to change the magnification of an image to be captured. Furthermore, the camera 201 also includes a digital zoom function that locally enlarges a portion of a captured image. This digital zoom function is performed in a case where the magnification achieved by the optical zoom is insufficient, i.e., in a case where the captured image is to be enlarged further. Further, the camera 201 is connected to the input unit 104 of the information processing apparatus 100 via the camera platform apparatus 200 using a wire and outputs captured image data to the information processing apparatus 100.

The drive unit 202 includes an actuator, a drive circuit for the actuator, and a peripheral circuit. The actuator is configured to rotate the camera platform apparatus 200 (more specifically, the camera 201) in pan and tilt directions under the control of the CPU 204. The drive unit 202 rotates the camera platform apparatus 200 (more specifically, the camera 201) in pan and tilt directions relative to the tracking target subject, thereby making it possible to capture an image of the tracked subject. Further, the wiper 203, which belongs to the drive unit 202, is configured to remove water droplets and other substances from a screen of the camera 201 of the camera platform apparatus 200.

The CPU 204, for example, controls each component of the camera platform apparatus 200 based on a program stored in the storage unit 205 and performs various types of control and processes of the camera platform apparatus 200. The storage unit 205 is a non-volatile memory. The storage unit 205 stores setting data and other data of the camera platform apparatus 200, a program executed by the CPU 204 to perform various types of control and processes of the camera platform apparatus 200 and the like in their predetermined areas. Further, the storage unit 205 stores various data acquired by the CPU 204 by performing various types of control and processes of the camera platform apparatus 200 and other data. The serial communication unit 206 is connected to the serial communication unit 106 of the information processing apparatus 100 so that the serial communication unit 206 can communicate with the serial communication unit 106. The serial communication unit 206 is an interface for performing communication with the information processing apparatus 100 under the control of the CPU 204.

Next, a hardware configuration of the console apparatus 300 will be described.

As illustrated in Fig. 2, the console apparatus 300 has a hardware configuration including a network communication unit 301, a console unit 302, a storage unit 303, a CPU 304, and a display unit 305.

The network communication unit 301 is an interface for communicating with the information processing apparatus 100 via the network 400 under control of the CPU 304. The console unit 302 includes, for example, a joystick, operating lever, and various switches. The user can control the rotation and zoom and adjust the gain of the camera platform apparatus 200 and the like by operating the console unit 302.

The storage unit 303 is a non-volatile memory. The storage unit 303 stores setting data and other data of the console apparatus 300, a program executed by the CPU 304 to perform various types of control and processes of the console apparatus 300 and the like in their predetermined areas. Further, the storage unit 303 stores various data acquired by the CPU 304 by performing various types of control and processes of the console apparatus 300 and other data. The CPU 304, for example, controls each component of the console apparatus 300 based on a program stored in the storage unit 303 and performs various types of control and processes of the console apparatus 300. The display unit 305 is, for example, a light emitting diode (LED) or display touch panel. The display unit 305 displays, for example, a status of the camera platform apparatus 200 and an alert to the user.

It should be noted that according to the present embodiment, each of the CPUs 103, 204, and 304 may be composed of one or more processors.

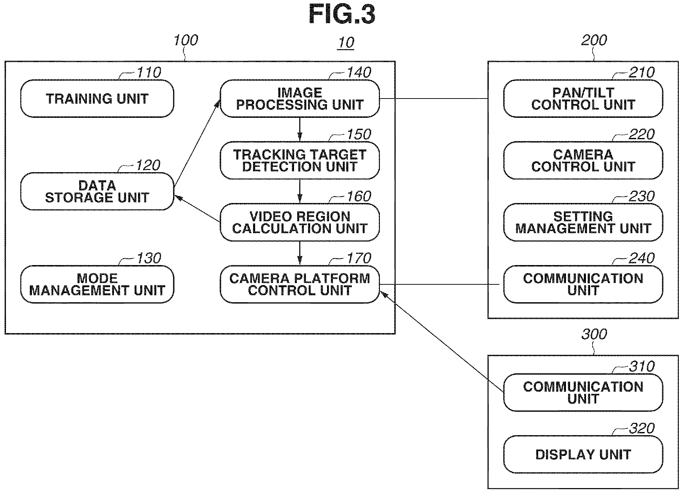

Fig. 3 is a diagram illustrating an example of a software configuration of each apparatus of the automatic tracking and imaging system 10 according to the first embodiment. In Fig. 3, each component corresponding to a component in Fig. 1 or 2 is assigned the same reference numeral, and detailed descriptions thereof are omitted.

First, a software configuration of the information processing apparatus 100 will be described.

As illustrated in Fig. 3, the information processing apparatus 100 has a software configuration including a training unit 110, a data storage unit 120, a mode management unit 130, an image processing unit 140, a tracking target detection unit 150, a video region calculation unit 160, and a camera platform control unit 170.

The training unit 110 performs a machine learning process to enable the tracking target detection unit 150 to detect the tracking target subject from an image (image data) captured by the camera 201. In this machine learning process performed by the training unit 110 according to the present embodiment, the GPU 102 is used in addition to the CPU 103 illustrated in Fig. 2. Specifically, in a case where the training unit 110 executes a training program including a trained model, the CPU 103 and the GPU 102 cooperate to perform calculations, thereby performing machine learning. It should be noted that only the CPU 103 or the GPU 102 illustrated in Fig. 2 may perform calculations for the machine learning process performed by the training unit 110.

The data storage unit 120 performs a process of storing an image (image data) captured through automatic subject tracking, a process of storing training data, a process of storing the detection result of the tracking target subject, a process of storing a control command value, and other processes. According to the present embodiment, the data storage unit 120 also serves the role of storing and registering a video region of the wiper 203 that may become an obstruction.

The mode management unit 130 manages an operation mode of the information processing apparatus 100. According to the present embodiment, the mode management unit 130 manages the following three modes: a training mode, an automatic tracking mode, and a manual mode.

The image processing unit 140 processes an image (image data) received from the camera platform apparatus 200 based on the data storage unit 120. According to the present embodiment, the image processing unit 140 performs, for example, a process of excluding a video region of the wiper 203, which is an obstruction, from a region where an object is detected by artificial intelligence (AI) and other processes.

The tracking target detection unit 150 inputs an output image from the image processing unit 140 as input data to a trained model generated by the training unit 110 and performs a process of detecting the tracking target subject and a process of detecting a misidentified obstruction. Further, the tracking target detection unit 150 detects the tracking target subject from the region where an object is detected by AI from which the video region of the obstruction stored in the data storage unit 120 has been excluded. It should be noted that, like the training unit 110, the tracking target detection unit 150 may use the GPU 102 illustrated in Fig. 2.

The video region calculation unit 160 performs calculations of the video regions of the tracking target and the misidentified obstruction on the detection results output from the tracking target detection unit 150.

The camera platform control unit 170 calculates a control signal configured to control the camera platform apparatus 200 based on the operation mode of the information processing apparatus 100. For example, in a case where the current operation mode of the information processing apparatus 100 is the automatic tracking mode, a control signal configured to control the camera platform apparatus 200 to center the tracking target subject in an image is calculated and output. Further, for example, in a case where the current operation mode of the information processing apparatus 100 is the manual mode, a drive command from the console apparatus 300 is output to the camera platform apparatus 200.

Next, a software configuration of the camera platform apparatus 200 will be described.

As illustrated in Fig. 3, the camera platform apparatus 200 has a software configuration including a pan/tilt control unit 210, a camera control unit 220, a setting management unit 230, and a communication unit 240.

The pan/tilt control unit 210 outputs a signal for driving the camera platform apparatus 200 (more specifically, the camera 201) in the pan and tilt directions to the drive unit 202 based on a drive command received from the information processing apparatus 100 via the communication unit 240. It should be noted that in a case where the drive command received from the information processing apparatus 100 via the communication unit 240 is a drive command for the wiper 203, the pan/tilt control unit 210 outputs a signal for driving the wiper 203 to the wiper 203. The camera control unit 220 outputs a signal for controlling the camera 201 to the camera 201 based on the command received from the information processing apparatus 100 via the communication unit 240. The setting management unit 230 manages a setting configured on the console apparatus 300. Specific examples of setting items managed by the setting management unit 230 include a maximum velocity and movable range for the pan and tilt drives. The communication unit 240 transmits and receives a control command and status information to and from the camera platform control unit 170 of the information processing apparatus 100 in accordance with a predefined communication rule (protocol).

Next, a software configuration of the console apparatus 300 will be described.

As illustrated in Fig. 3, the console apparatus 300 has a software configuration including a communication unit 310 and a display unit 320.

The communication unit 310 transmits and receives a control command and status information to and from the camera platform control unit 170 of the information processing apparatus 100 in accordance with a predefined communication rule (protocol). Like the display unit 305 illustrated in Fig. 2, the display unit 320 displays, for example, a status of the camera platform apparatus 200 and an alert to the user.

Next, a sequence of operations of the information processing apparatus 100, the camera platform apparatus 200, and the console apparatus 300 in the automatic tracking mode.

The user operates the console apparatus 300, and the console apparatus 300 transmits a signal for transitioning to the automatic tracking mode to the information processing apparatus 100. Subsequently, the camera platform apparatus 200 captures an image of the tracking target subject using the camera 201 under control of the information processing apparatus 100. Then, the camera platform apparatus 200 transmits the image (image data) captured by the camera 201 to the information processing apparatus 100. Subsequently, the information processing apparatus 100 detects the tracking target subject from the image (image data) transmitted from the camera platform apparatus 200 and controls the camera platform apparatus 200 to center the tracking target subject in the image.

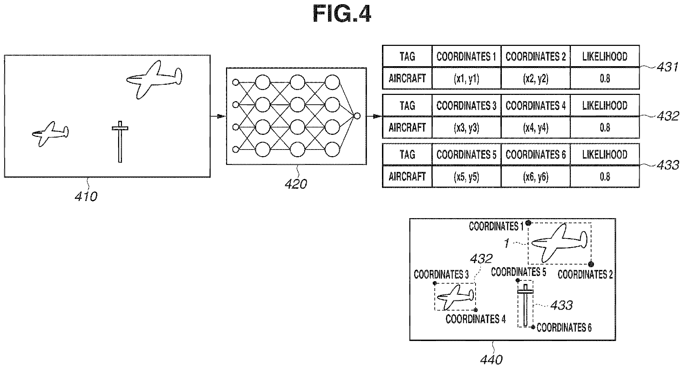

Fig. 4 is a diagram illustrating an example of a process of detecting the tracking target subject and a misidentified obstruction performed by the tracking target detection unit 150 of the information processing apparatus 100 according to the first embodiment using a trained model 420 generated by the training unit 110.

In Fig. 4, input data 410 input to the trained model 420 is image data captured by the camera 201 of the camera platform apparatus 200. It should be noted that since the camera 201 of the camera platform apparatus 200 captures a motion image, the input data 410 that is actually input to the trained model 420 is data corresponding to a single frame in the motion image, but in order to simplify the description, the input data 410 will be described as an image hereinafter.

In Fig. 4, the trained model 420 includes, for example, a neural network, and an internal parameter of the trained model is generated by the training unit 110. It should be noted that the training unit 110 may include an error detection unit and an updating unit. In this case, the error detection unit of the training unit 110 obtains the error between the training data and output data output from an output layer of the neural network based on input data input to an input layer of the neural network. Further, the error detection unit may detect the error between the output data from the neural network and the training data using, for example, a loss function. The updating unit of the training unit 110, for example, updates a coefficient for weighting connections between nodes in the neural network or other coefficients based on the error obtained by the error detection unit so that the error is reduced. The updating unit updates the coefficient for weighting connections or other coefficients using, for example, a backpropagation method. The backpropagation method herein is a scheme for adjusting the coefficient for weighting connections between nodes in the neural network or other coefficients so that the error obtained by the error detection unit is reduced.

In Fig. 4, output data 431 to 433 from the trained model 420 contain tag, coordinate, and likelihood information about each object present in the input data 410.

In each of the output data 431 to 433, the tag for the object is "aircraft", which is an example of the tracking target subject. The tag for the object is selected from, for example, tags included in training data (data for training) input during training.

In each of the output data 431 to 433, the coordinates of two points are output as the coordinates of the object. Specifically, the coordinates of the two points output as the coordinates of the object in each of the output data 431 to 433 are the upper-left and lowerright coordinates of an estimated bounding box of the object, as illustrated in an image 440 corresponding to the input data 410 in Fig. 4. Although the coordinates in the output data 431 to 433 are coordinates in the captured image data, the coordinates of the position of the camera platform apparatus 200 after driving can be calculated based on the pan, tilt, and zoom positions of the camera platform apparatus 200 during coordinate output and the drive amount of the camera platform apparatus 200.

In each of the output data 431 to 433, a likelihood value of the object is between 0 and 1, and greater values indicate higher degrees of reliability of the detection result with respect to the output tag. Specifically, according to the present embodiment, the likelihood of the object indicates the degree of certainty of object detection (detection of the aircraft specified by the tag) by Al. Setting a threshold for the likelihood makes it possible to output only data with a degree of reliability that is greater than or equal to a certain level.

In Fig. 4, the output data 431 represents an in-flight aircraft, the output data 432 represents a parked aircraft, and the output data 433 represents a steel tower with a feature similar to that of the aircraft. In a case where the in-flight aircraft represented by the output data 431 in Fig. 4 is intended to be set as the tracking target subject, an obstruction that is not the tracking target may also be detected as having the same tag or similar likelihood, in addition to the tracking target subject.

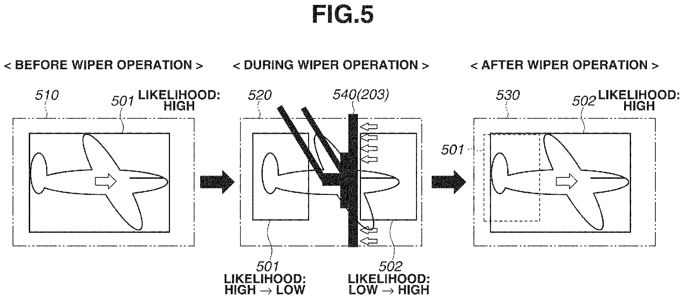

Fig. 5 is a diagram illustrating an example of a process in which the information processing apparatus 100 according to the first embodiment performs automatic tracking of an aircraft being the tracking target subject. Further, Fig. 5 illustrates an example in which the wiper 203 of the camera platform apparatus 200 is designated as an obstruction 540, which is present between the camera 201 and the aircraft being the tracking target subject and occludes at least a portion of the aircraft in an image captured by the camera 201. Further, the wiper 203 being the obstruction 540 moves left and right on a screen of the camera 201 tracking the subject.

In Fig. 5, an image 510 is an image captured by the camera 201 during a state before the wiper 203 being the obstruction 540 occludes the aircraft being the subject (i.e., a state before the operation of the wiper 203). The tracking target detection unit 150 of the information processing apparatus 100 detects an object detection result region 501 from the image 510 as a subject region that is a region of the tracking target subject (in the current example an aircraft). Further, at the time of acquisition of the image 510 illustrated in Fig. 5, for example, the camera platform control unit 170 of the information processing apparatus 100 performs control to set the object detection result region 501 as the subject region of the tracking target subject and perform automatic tracking.

Thereafter, the user operates the console unit 302 of the console apparatus 300 to drive the wiper 203, and the information processing apparatus 100 receives this operation command. Next, the information processing apparatus 100 transmits the user operation command to the camera platform apparatus 200. When the camera platform apparatus 200 receives the user operation command, the CPU 204 controls the drive unit 202 to drive the wiper 203. At this time, the CPU 103 of the information processing apparatus 100 has already acquired information about when the wiper 203 is driven (the wiper 203 as the obstruction 540 passes in front of the camera platform apparatus 200) while receiving the user operation command from the console apparatus 300. In some embodiments, the wiper operation may be an automatic operation, that is to say that it a wiper operation could be instructed, e.g. to start or stop, based on a sensor configured to monitor for a parameter or environmental conditions, e.g. dirt, liquid or similar.

In Fig. 5, an image 520 is an image captured by the camera 201 in a state where at least a portion of the aircraft being the subject is occluded (in the example illustrated in Fig. 5, a portion is occluded) by the wiper 203 being the obstruction 540 (i.e., a state during the operation of the wiper 203). The tracking target detection unit 150 of the information processing apparatus 100 detects the plurality of object detection result regions 501 and 502 sandwiching the obstruction 540 from the image 520 as subject regions that are regions of the tracking target subject (aircraft). Further, at the time of acquisition of the image 520 illustrated in Fig. 5, the likelihood of the subject (aircraft) in the object detection result region 501 changes from high to low, and the likelihood of the subject (aircraft) in the object detection result region 502 changes from low to high. In other words, at the time of acquisition of the image 520 illustrated in Fig. 5, the likelihood of the subject (aircraft) in the object detection result region 502 is higher than the likelihood of the subject (aircraft) in the object detection result region 501. In this case, for example, the camera platform control unit 170 of the information processing apparatus 100 performs control to set a subject region of the tracking target subject based on the likelihood of the subject (aircraft) and perform automatic tracking. Specifically, according to the present embodiment, for example, the camera platform control unit 170 of the information processing apparatus 100 performs control to set the object detection result region 502 with the highest likelihood of the subject (aircraft) as the subject region of the tracking target subject and perform automatic tracking.

The image 520 illustrated in Fig. 5 will be described in further detail.

As in the image 520 illustrated in Fig. 5, the subject region of the subject (aircraft) is split due to occlusion by the wiper 203 being the obstruction 540, resulting in the tracking target detection unit 150 detecting the plurality of object detection result regions 501 and 502. In this case, the object detection result region 501 located in the movement direction of the wiper 203 specified by outline (unfilled) arrows in Fig. 5 is likely to decrease, and the likelihood of the subject (aircraft) also decreases. At this time, for example, the camera platform control unit 170 (the CPU 103) constantly monitors the likelihood of the subject (aircraft) in the object detection result region 501.

Thereafter, for example, in a case where the likelihood of the subject (aircraft) in the object detection result region 501, which is a first subject region to which automatic tracking is being applied from the image 510, becomes less than or equal to a predetermined threshold, the camera platform control unit 170 (the CPU 103) may perform first and second example processes.

Specifically, in the first example process, for example, the camera platform control unit 170 switches the subject region of the tracking target subject (aircraft) from the object detection result region 501 to the object detection result region 502, which is a second subject region with a likelihood greater than or equal to the predetermined threshold, and sets the object detection result region 502.

Specifically, in the second example process, for example, the camera platform control unit 170 sets a subject region of the tracking target subject (aircraft) based on the likelihood of the subject (aircraft) and at least one of a degree of overlap with the object detection result region 501 and a degree of adjacency to the object detection result region 501. According to the present embodiment, for example, the camera platform control unit 170 switches the subject region of the tracking target subject (aircraft) from the object detection result region 501 to the object detection result region 502 based on the likelihood of the subject and at least one of the degrees and sets the object detection result region 502.

In the second example process described above, the degree of overlap and the degree of adjacency may be defined by the following method(s). That is to say that the degree of overlap and/or the degree of adjacency may be defined by one or a combination of the following method(s):
· The degree of overlap with the object detection result region is defined using detection frames for the subject (aircraft) by AI.
· The degree of overlap with the object detection result region is determined based on the degree of overlap between the detection frames for the subject (aircraft) by Al. In this case, the degree of overlap between the detection frames is determined based on a contact frame region and/or area of the overlapping detection frames.
· The degree of overlap with the object detection result region is determined based on the degree of adjacency to the detected subject region. In this case, the degree of adjacency may be determined using the distance between the central points of the detection frames for the subject (aircraft) by Al, the shortest distance from an edge of a detection frame to an edge of a detection frame, or the equivalent.
· The detection frame with the greatest value of the degree of overlap or adjacency is designated as an adjacent detection frame, and this adjacent detection frame is set as the subject region of the tracking target subject (aircraft).

For example, the camera platform control unit 170 (the CPU 103) transmits control information to the camera platform apparatus 200 so that automatic tracking is applied to the object detection result region 502, which is the set subject region of the tracking target subject. Then, the CPU 204 of the camera platform apparatus 200 controls and drives the drive unit 202 to automatically track the object detection result region 502 based on the control information received from the information processing apparatus 100.

In Fig. 5, an image 530 is an image captured by the camera 201 in a state where the wiper 203 being the obstruction 540 no longer occludes the aircraft being the subject following temporary occlusion of the aircraft (i.e., a state after the operation of the wiper 203). At the time of acquisition of the image 530 illustrated in Fig. 5, for example, the camera platform control unit 170 of the information processing apparatus 100 performs control to set the object detection result region 502 as the subject region of the tracking target subject and perform automatic tracking.

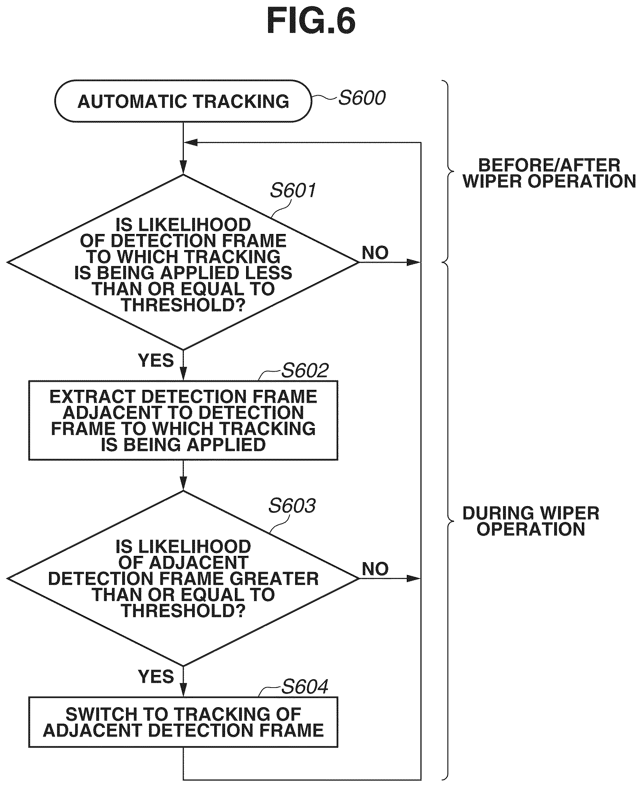

Fig. 6 is a flowchart illustrating an example of a processing procedure in a method for controlling the information processing apparatus 100 according to the first embodiment. Specifically, Fig. 6 is a flowchart illustrating an example of a processing procedure for a case where the operation mode of the information processing apparatus 100 is the automatic tracking mode and automatic tracking is being applied a detection frame in the subject region of the tracking target subject.

In a case where automatic tracking is being applied in step S600 in Fig. 6, first, in step S601 in Fig. 6, for example, the camera platform control unit 170 (the CPU 103) determines whether the likelihood of the subject in the detection frame in the subject region to which tracking is being applied is less than or equal to a predetermined threshold. This process of step S601 in Fig. 6 is performed when the wiper 203 being the obstruction 540 illustrated in Fig. 5 appears in the image 520. Further, according to the present embodiment, the detection frame in the subject region to which tracking is being applied in the determination of the likelihood of the subject in step S601 in Fig. 6 is, for example, the object detection result region 501 in the image 520 in Fig. 5.

In step S601 in Fig. 6, for example, in a case where the camera platform control unit 170 determines that the likelihood of the subject in the detection frame in the subject region to which tracking is being applied is not less than or equal to the predetermined threshold (NO in step S601), the processing is held at step S601.

On the other hand, in step S601 in Fig. 6, for example, in a case where the camera platform control unit 170 determines that the likelihood of the subject in the detection frame in the subject region to which tracking is being applied is less than or equal to the predetermined threshold (YES in step S601), the processing proceeds to step S602.

In step S602 in Fig. 6, for example, the camera platform control unit 170 extracts an adjacent detection frame from the detection frames detected by the tracking target detection unit 150 based on at least one of the degree of overlap with and the degree of adjacency to the detection frame in the subject region to which tracking is being applied. According to the present embodiment, the adjacent detection frame extracted in step S602 in Fig. 6 is, for example, the object detection result region 502 in the image 520 in Fig. 5.

Next, in step S603 in Fig. 6, for example, the camera platform control unit 170 (the CPU 103) determines whether the likelihood of the subject in the adjacent detection frame extracted in step S602 is greater than or equal to a predetermined threshold. The predetermined threshold used in step S603 in Fig. 6 may be the same value as the predetermined threshold used in step S601 in Fig. 6.

In step S603 in Fig. 6, for example, in a case where the camera platform control unit 170 determines that the likelihood of the subject in the adjacent detection frame extracted in step S602 is not greater than or equal to the predetermined threshold (NO in step S603), the processing returns to step S601.

On the other hand, in step S603 in Fig. 6, for example, in a case where the camera platform control unit 170 determines that the likelihood of the subject in the adjacent detection frame extracted in step S602 is greater than or equal to the predetermined threshold (YES in step S603), the processing proceeds to step S604.

In step S604 in Fig. 6, for example, the camera platform control unit 170 (the CPU 103) switches the subject region of the tracking target subject from the detection frame in the subject region to which tracking is currently being applied to the adjacent detection frame extracted in step S602 and sets the adjacent detection frame. In other words, in the image 520 in Fig. 5, the subject region of the tracking target subject is switched from the object detection result region 501 to the object detection result region 502, and the object detection result region 502 is set.

Upon termination of the process in step S604 in Fig. 6, the processing returns to step S601.

In information processing apparatus 100 according to the first embodiment, the following processes are performed.

The image processing unit 140 acquires an image obtained by imaging the subject with the camera 201 from the camera platform apparatus 200. The image processing unit 140 configured to perform the process of acquiring an image obtained by imaging the subject constitutes an image acquisition unit. The tracking target detection unit 150 detects a subject region that is a region of the tracking target subject from the image acquired by the image processing unit 140. The tracking target detection unit 150 configured to perform the process of detecting a subject region of the tracking target subject constitutes a detection unit. In a case where at least a portion of the subject is occluded by the obstruction 540 in the image acquired by the image processing unit 140 and a plurality of subject regions of the subject is detected by the tracking target detection unit 150, the camera platform control unit 170 performs the following process. In this case, the camera platform control unit 170 sets a subject region of the tracking target subject based on the likelihood of the subject. The camera platform control unit 170 configured to perform the process of setting a subject region of the tracking target subject constitutes a setting unit.

The above-described configuration makes it possible to reduce loss of the tracking target subject even in a case where at least a portion of the tracking target subject is occluded by the obstruction 540 and a plurality of subject regions of the subject is detected. This makes it possible to continue automatic subject tracking with high accuracy.

Further, according to the first embodiment, the camera platform control unit 170 may be configured to set the subject region with the highest likelihood, among the plurality of subject regions of the subject detected by the tracking target detection unit 150, as the subject region of the tracking target subject.

Further, according to the first embodiment, in a case where a plurality of subject regions is detected by the tracking target detection unit 150 and the likelihood of a first subject region that is included in the plurality of subject regions and to which tracking is being applied becomes less than or equal to a threshold, the camera platform control unit 170 performs the following process. In this case, the camera platform control unit 170 may be configured to switch the subject region of the tracking target subject from the first subject region to the second subject region with the likelihood greater than or equal to the threshold among the plurality of subject regions. Furthermore, in this case, the camera platform control unit 170 may switch the subject region of the tracking target subject from the first subject region to the second subject region based on the likelihood of the subject and at least one of the degree of overlap with and the degree of adjacency to the first subject region.

Further, according to the first embodiment, the tracking target detection unit 150 may perform object detection using AI with the trained model 420 to which an image is input and from which a subject region is output while detecting a subject region of the tracking target subject from the image acquired by the image processing unit 140.

### Second Embodiment

Next, a second embodiment will be described. It should be noted that in the following description of the second embodiment, points common to the first embodiment described above are omitted, and only the differences from the first embodiment are described.

A schematic configuration of the automatic tracking and imaging system 10 according to the second embodiment is similar to the schematic configuration of the automatic tracking and imaging system 10 according to the first embodiment illustrated in Fig. 1. Further, hardware configurations of the apparatuses of the automatic tracking and imaging system 10 according to the second embodiment are similar to the hardware configurations of the apparatuses of the automatic tracking and imaging system 10 according to the first embodiment illustrated in Fig. 2.

Further, software configurations of the apparatuses of the automatic tracking and imaging system 10 according to the second embodiment are similar to the software configurations of the apparatuses of the automatic tracking and imaging system 10 according to the first embodiment illustrated in Fig. 3.

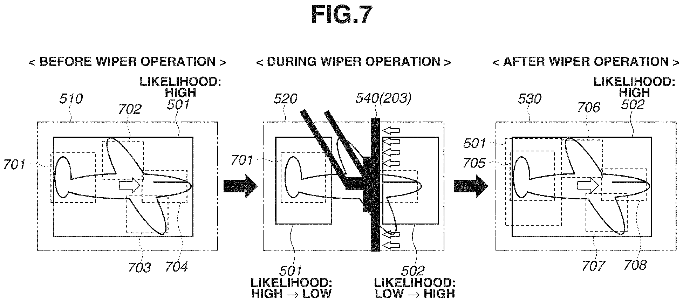

Fig. 7 is a diagram illustrating an example of a process in which the information processing apparatus 100 according to the second embodiment performs automatic tracking of an aircraft being the tracking target subject. In Fig. 7, each component similar to a component illustrated in Fig. 5 is assigned the same reference numeral, and detailed descriptions thereof are omitted. Further, Fig. 7 illustrates an example in which the wiper 203 of the camera platform apparatus 200 is designated as an obstruction 540, which is present between the camera 201 and the aircraft being the tracking target subject and occludes at least a portion of the aircraft in an image captured by the camera 201. Further, the wiper 203 being the obstruction 540 moves left and right on the screen of the camera 201.

Further, according to the second embodiment, part tracking is performed in which the camera 201 is driven and controlled so that a subject part region, which is a region of a part of the subject, is detected and a centroid position of the subject part region corresponds to a designated position within the screen of the camera 201, as necessary.

In Fig. 7, as in Fig. 5, the screen of the camera 201 transitions from the image 510 to the image 520 and then to the image 530, and the wiper 203 being the obstruction 540 appears when the image 520 is acquired. Further, the detection of a region of a part of the tracking target subject to which automatic tracking is being applied is constantly performed. Part detection is performed by transmitting image data from the camera 201 to the input unit 104 and performing the processes of the image processing unit 140 to the camera platform control unit 170, as in AI object detection of the subject. Further, during part tracking, the processes of the image processing unit 140 to the camera platform control unit 170 of the information processing apparatus 100 are performed, and operation information is transmitted to the pan/tilt control unit 210 via the communication unit 240 of the camera platform apparatus 200. At this time, pre-training with the data used by the training unit 110 for the part of the tracking target subject is also necessary.

In Fig. 7, the image 510 is an image captured by the camera 201 during a state before the wiper 203 being the obstruction 540 occludes the aircraft being the subject (i.e., a state before the operation of the wiper 203). At the time of acquisition of the image 510 illustrated in Fig. 7, for example, the camera platform control unit 170 of the information processing apparatus 100 performs control to set the object detection result region 501 (first subject region) as the subject region of the tracking target subject and perform automatic tracking. According to the present embodiment, at the time of acquisition of the image 510 illustrated in Fig. 7, the tracking target detection unit 150 of the information processing apparatus 100 detects object part detection result regions 701 to 704, which are subject part regions included at least partially in the object detection result region 501, in advance.

In Fig. 7, the image 520 is an image captured by the camera 201 in a state where at least a portion of the aircraft being the subject is occluded (in the example illustrated in Fig. 7, a portion is occluded) by the wiper 203 being the obstruction 540 (i.e., a state during the operation of the wiper 203). The tracking target detection unit 150 of the information processing apparatus 100 detects the plurality of object detection result regions 501 and 502 sandwiching the obstruction 540 from the image 520 as subject regions that are regions of the tracking target subject (aircraft). Further, at the time of acquisition of the image 520 illustrated in Fig. 7, the likelihood of the subject (aircraft) in the object detection result region 501 changes from high to low, and the likelihood of the subject (aircraft) in the object detection result region 502 changes from low to high. In other words, at the time of acquisition of the image 520 illustrated in Fig. 7, the likelihood of the subject (aircraft) in the object detection result region 502 is higher than the likelihood of the subject (aircraft) in the object detection result region 501. Further, for example, in a case where the likelihood of the subject (aircraft) in the object detection result region 501, which is the first subject region to which automatic tracking is being applied from the image 510, becomes less than or equal to the predetermined threshold (first threshold), the camera platform control unit 170 of the information processing apparatus 100 may perform the following process. In this case, for example, the camera platform control unit 170 switches from automatic tracking of the object detection result region 501 to automatic part tracking to track a subject part region among the object part detection result regions 701 to 704 detected at the time of acquisition of the image 510 illustrated in Fig. 7. The subject part region to which automatic part tracking is applied after the switch may be, for example, a single part, such as the object part detection result region 701, or a plurality of parts, such as the object part detection result regions 701 and 702. In this case, tracking of a plurality of parts can be conducted in a case where a plurality of object part detection result regions is detected for the tracking target subject. In this case, for example, a method may be employed in which the centroid position of the entire subject within the screen of the camera 201 is estimated based on the position of each of the plurality of tracking target parts and the plurality of tracking target parts is tracked.

Thereafter, in a case where the likelihood of the subject (aircraft) in the object detection result region 501 further decreases and becomes less than or equal to a second threshold, which is less than the predetermined threshold (first threshold), for example, the camera platform control unit 170 may perform the following process. In this case, the camera platform control unit 170 switches from automatic part tracking of the object part detection result region to automatic tracking of the object detection result region 502 (second subject region) detected by the tracking target detection unit 150 and differing from the object detection result region 501 and sets the object detection result region 502.

In Fig. 7, the image 530 is an image captured by the camera 201 in a state where the wiper 203 being the obstruction 540 no longer occludes the aircraft being the subject following temporary occlusion of the aircraft (i.e., a state after the operation of the wiper 203). At the time of acquisition of the image 530 illustrated in Fig. 7, for example, the camera platform control unit 170 of the information processing apparatus 100 performs control to set the object detection result region 502 as the subject region of the tracking target subject and perform automatic tracking.

Further, according to the present embodiment, object part detection result regions 705 to 708 are detected at the time of acquisition of the image 530 illustrated in Fig. 7 to prepare for the next occlusion of the subject (aircraft) by the wiper 203 being the obstruction 540. In other words, the tracking target detection unit 150 of the information processing apparatus 100 detects the object part detection result regions 705 to 708, which are subject part regions included at least partially in the object detection result region 502, in advance.

It should be noted that the object part detection result regions 701 to 708 illustrated in Fig. 7 may have a subject likelihood parameter when detected, and an object part detection result region with a likelihood greater than or equal to a predetermined threshold, among the object part detection result regions 701 to 708, may be output as a detection result region, like the object detection result regions.

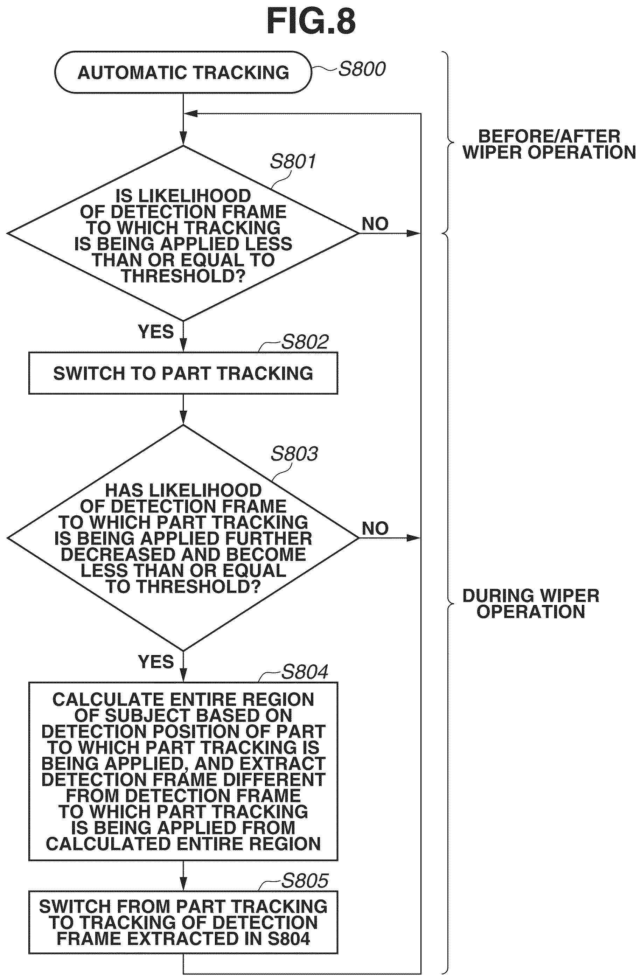

Fig. 8 is a flowchart illustrating an example of a processing procedure in a method for controlling the information processing apparatus 100 according to the second embodiment. Specifically, Fig. 8 is a flowchart illustrating an example of a processing procedure for a case where the operation mode of the information processing apparatus 100 is the automatic tracking mode and automatic tracking is being applied a detection frame in the subject region (including a subject part region) of the tracking target subject.

In a case where automatic tracking is being applied in step S800 in Fig. 8, the tracking target detection unit 150 also detects the subject part region included at least partially in the subject region of the tracking target subject.

Then, in step S801 in Fig. 8, for example, the camera platform control unit 170 (the CPU 103) determines whether the likelihood of the subject in the detection frame in the first subject region to which tracking is being applied is less than or equal to the predetermined threshold (first threshold). This process of step S801 in Fig. 8 is performed when the wiper 203 being the obstruction 540 illustrated in Fig. 7 appears in the image 520. Further, according to the present embodiment, the detection frame in the subject region to which tracking is being applied in the determination of the likelihood of the subject in step S801 in Fig. 8 is, for example, the object detection result region 501 in the image 520 in Fig. 7.

In step S801 in Fig. 8, for example, in a case where the camera platform control unit 170 determines that the likelihood of the subject in the detection frame in the first subject region to which tracking is being applied is not less than or equal to the predetermined threshold (first threshold) (NO in step S801), the processing is held at step S801.

On the other hand, in step S801 in Fig. 8, for example, in a case where the camera platform control unit 170 determines that the likelihood of the subject in the detection frame in the first subject region to which tracking is being applied is less than or equal to the predetermined threshold (first threshold) (YES in step S801), the processing proceeds to step S802.

In step S802 in Fig. 8, for example, the camera platform control unit 170 (the CPU 103) switches the subject region of the tracking target subject from the first subject region to the subject part region included at least partially in the first subject region and sets the subject part region. In other words, the process of step S802 initiates automatic part tracking of the subject part region.

Next, in step S803 in Fig. 8, for example, the camera platform control unit 170 (the CPU 103) determines whether the likelihood of the subject in the detection frame in the first subject region to which part tracking is being applied is less than or equal to the second threshold less than the first threshold.

In step S803 in Fig. 8, for example, in a case where the camera platform control unit 170 determines that the likelihood of the subject in the detection frame in the first subject region to which part tracking is being applied is not less than or equal to the second threshold (NO in step S803), the processing returns to step S801.

On the other hand, in step S803 in Fig. 8, for example, in a case where the camera platform control unit 170 determines that the likelihood of the subject in the detection frame in the first subject region to which part tracking is being applied is less than or equal to the second threshold (YES in step S803), the processing proceeds to step S804.

In step S804 in Fig. 8, for example, the camera platform control unit 170 (the CPU 103) calculates a region that contains the entire subject based on the detection position of the part of the subject to which part tracking is being applied. Next, for example, the camera platform control unit 170 (the CPU 103) extracts a different from the detection frame that is included in the subject region detected by the tracking target detection unit 150 and to which part tracking is being applied, from the calculated region containing the entire subject. According to the present embodiment, the detection frame extracted in step S804 in Fig. 8 is, for example, the object detection result region 502 in the image 520 in Fig. 7.

Next, in step S805 in Fig. 8, for example, the camera platform control unit 170 (the CPU 103) switches the subject region of the tracking target subject from the subject part region to which part tracking is currently being applied to a subject region in the detection frame extracted in step S804 and sets the subject region.

Upon termination of the process in step S805 in Fig. 8, the processing returns to step S801.

In information processing apparatus 100 according to the second embodiment, the following processes are performed.

The tracking target detection unit 150 further detects a subject part region, which is a region of a part of the subject included at least partially in the subject region, which is a region of the tracking target subject, from an image acquired by the image processing unit 140. In a case where a plurality of subject regions is detected by the tracking target detection unit 150 and the likelihood of the first subject region that is included in the plurality of subject regions and to which tracking is being applied becomes less than or equal to the first threshold, the camera platform control unit 170 performs the following process. In this case, the camera platform control unit 170 switches the subject region of the tracking target subject from the first subject region to the subject part region included at least partially in the first subject region and sets the subject part region. Furthermore, in a case where the likelihood of the first subject region becomes less than or equal to the second threshold, which is less than the first threshold, while tracking is being applied to the subject part region, the camera platform control unit 170 performs the following process. In this case, the camera platform control unit 170 switches the subject region of the tracking target subject from the first subject region (the subject part region of the first subject region) to the second subject region included in the plurality of subject regions detected by the tracking target detection unit 150 and differing from the first subject region and sets the second subject region.

The above-described configuration makes it possible to reduce loss of the tracking target subject even in a case where at least a portion of the tracking target subject is occluded by the obstruction 540 and a plurality of subject regions of the subject is detected. This makes it possible to continue automatic subject tracking with high accuracy.

### Third Embodiment

Next, a third embodiment will be described. It should be noted that in the following description of the third embodiment, points common to the first and second embodiments described above are omitted, and only the differences from the first and second embodiments are described.

A schematic configuration of the automatic tracking and imaging system 10 according to the third embodiment is similar to the schematic configuration of the automatic tracking and imaging system 10 according to the first embodiment illustrated in Fig. 1. Further, hardware configurations of the apparatuses of the automatic tracking and imaging system 10 according to the third embodiment are similar to the hardware configurations of the apparatuses of the automatic tracking and imaging system 10 according to the first embodiment illustrated in Fig. 2.

Further, software configurations of the apparatuses of the automatic tracking and imaging system 10 according to the third embodiment are similar to the software configurations of the apparatuses of the automatic tracking and imaging system 10 according to the first embodiment illustrated in Fig. 3.

While the wiper 203 of the camera platform apparatus 200 is designated as the obstruction 540, which occludes at least a portion of the tracking target subject (aircraft), according to the first and second embodiments described above, the obstruction described above is not limited to the wiper 203 in the present disclosure. Thus, the third embodiment in which another obstruction (e.g., streetlight, traffic control tower, antenna, tree, utility pole, portion of another parked aircraft, or the equivalent) other than the wiper 203 is designated as the obstruction that occludes at least a portion of the tracking target subject (aircraft) will be described.

According to the third embodiment, for another obstruction other than the wiper 203 described above as an example, the position of the obstruction passing through a path along which the camera 201 captures an image can be registered in advance in the data storage unit 120 of the information processing apparatus 100 based on data of the pan/tilt control unit 210 of the camera platform apparatus 200. This process makes it possible for the information processing apparatus 100 or the camera platform apparatus 200 to recognize the time when the obstruction passes through the screen during automatic tracking and imaging by the camera 201, thereby making it possible to realize the automatic tracking and imaging system 10 similar to those according to the first and second embodiments.

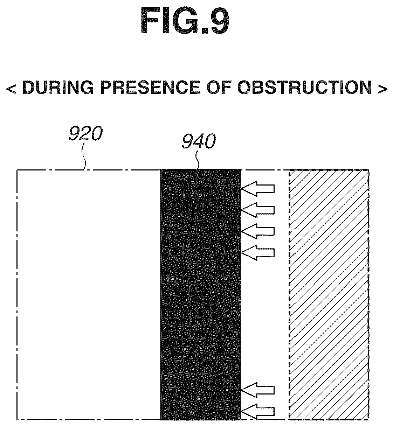

Fig. 9 is a diagram illustrating an example of an image 920 at a time when an obstruction 940 is within the screen of the camera 201 according to the third embodiment. As described above, it is assumed that the obstruction 940 is the other obstruction other than the wiper 203. Further, before performing automatic subject tracking, the information processing apparatus 100 acquires position information about the obstruction 940, which may appear in the image 920, in advance based on pan, tilt, and zoom information that can be acquired from the camera platform apparatus 200. Then, before performing automatic subject tracking, the information processing apparatus 100 records information indicating when the obstruction 940 appears within the screen of the camera 201 in the RAM 101 in advance based on the acquired position information about the obstruction 940.

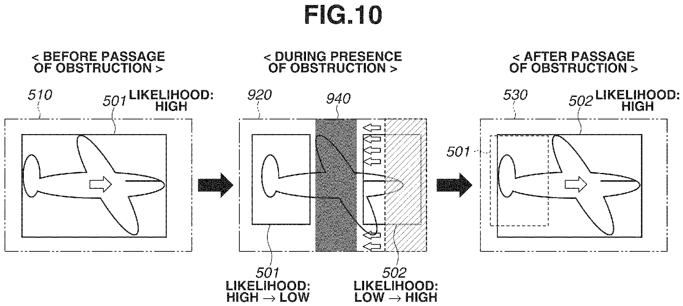

Fig. 10 is a diagram illustrating the first example process in which the information processing apparatus 100 according to the third embodiment performs automatic tracking of an aircraft being the tracking target subject. In Fig. 10, each component similar to a component illustrated in Fig. 5 is assigned the same reference numeral, and detailed descriptions thereof are omitted. Further, the obstruction 940 in Fig. 9, which is present between the camera 201 and the aircraft being the tracking target subject and occludes at least a portion of the aircraft in an image captured by the camera 201 is also illustrated in Fig. 10. Further, the obstruction 940 moves left and right on the screen of the camera 201 tracking the subject.

In Fig. 10, as in Fig. 5, the screen of the camera 201 transitions from the image 510 to the image 920 and then to the image 530, and the obstruction 940 appears when the image 920 is acquired.

In Fig. 10, as in Fig. 5, the image 510 is an image captured by the camera 201 during a state before the obstruction 940 occludes the aircraft being the subject (i.e., a state before the obstruction 940 passes). The tracking target detection unit 150 of the information processing apparatus 100 detects the object detection result region 501 from the image 510 as a subject region that is a region of the tracking target subject (aircraft). Further, at the time of acquisition of the image 510 illustrated in Fig. 5, for example, the camera platform control unit 170 of the information processing apparatus 100 performs control to set the object detection result region 501 as the subject region of the tracking target subject and perform automatic tracking.

In Fig. 10, the image 920 is an image captured by the camera 201 in a state where at least a portion of the aircraft being the subject is occluded (in the example illustrated in Fig. 10, a portion is occluded) by the obstruction 940 (i.e., a state where the obstruction 940 is within the screen of the camera 201). The tracking target detection unit 150 of the information processing apparatus 100 detects the plurality of object detection result regions 501 and 502 sandwiching the obstruction 940 from the image 920 as subject regions that are regions of the tracking target subject (aircraft). Further, at the time of acquisition of the image 920 illustrated in Fig. 10, the likelihood of the subject (aircraft) in the object detection result region 501 changes from high to low, and the likelihood of the subject (aircraft) in the object detection result region 502 changes from low to high. In other words, at the time of acquisition of the image 920 illustrated in Fig. 10, the likelihood of the subject (aircraft) in the object detection result region 502 is higher than the likelihood of the subject (aircraft) in the object detection result region 501. In this case, for example, the camera platform control unit 170 of the information processing apparatus 100 performs control to set a subject region of the tracking target subject based on the likelihood of the subject (aircraft) and perform automatic tracking. Specifically, according to the present embodiment, for example, the camera platform control unit 170 of the information processing apparatus 100 performs control to set the object detection result region 502 with the highest likelihood of the subject (aircraft) as the subject region of the tracking target subject and perform automatic tracking. In this case, the camera platform control unit 170 may set the subject region of the tracking target subject (aircraft) based on at least one of the degree of overlap with and the degree of adjacency to the object detection result region 501, in addition to the likelihood of the subject (aircraft).

In Fig. 10, the image 530 is an image captured by the camera 201 in a state where the obstruction 940 no longer occludes the aircraft being the subject following temporary occlusion of the aircraft (i.e., a state after the obstruction 940 is no longer within the screen of the camera 201 after passage). At the time of acquisition of the image 530 illustrated in Fig. 10, for example, the camera platform control unit 170 of the information processing apparatus 100 performs control to set the object detection result region 502 as the subject region of the tracking target subject and perform automatic tracking.

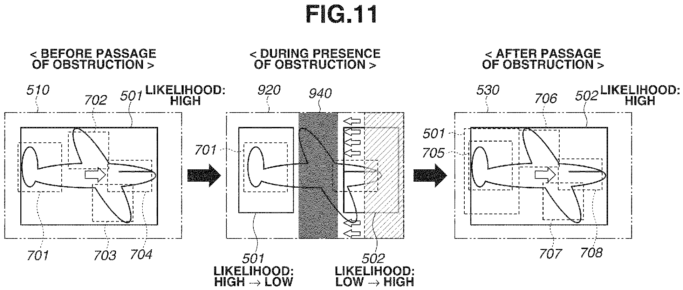

Fig. 11 is a diagram illustrating the second example process in which the information processing apparatus 100 according to the third embodiment performs automatic tracking of an aircraft being the tracking target subject. In Fig. 11, each component similar to a component illustrated in Figs. 7 and 10 is assigned the same reference numeral, and detailed descriptions thereof are omitted.

In Fig. 11, as in Fig. 10, the screen of the camera 201 transitions from the image 510 to the image 920 and then to the image 530, and the obstruction 940 appears when the image 920 is acquired. Further, the detection of a region of a part of the tracking target subject to which automatic tracking is being applied is constantly performed. Part detection is performed by transmitting image data from the camera 201 to the input unit 104 and performing the processes of the image processing unit 140 to the camera platform control unit 170, as in Al object detection of the subject. Further, during part tracking, the processes of the image processing unit 140 to the camera platform control unit 170 of the information processing apparatus 100 are performed, and operation information is transmitted to the pan/tilt control unit 210 via the communication unit 240 of the camera platform apparatus 200. At this time, pre-training with the data used by the training unit 110 for the part of the tracking target subject is also necessary.

In Fig. 11, as in Fig. 10, the image 510 is an image captured by the camera 201 during a state before the obstruction 940 occludes the aircraft being the subject (i.e., a state before the obstruction 940 passes). At the time of acquisition of the image 510 illustrated in Fig. 11, for example, the camera platform control unit 170 of the information processing apparatus 100 performs control to set the object detection result region 501 (first subject region) as the subject region of the tracking target subject and perform automatic tracking. According to the present embodiment, at the time of acquisition of the image 510 illustrated in Fig. 11, the tracking target detection unit 150 of the information processing apparatus 100 detects the object part detection result regions 701 to 704, which are subject part regions included at least partially in the object detection result region 501, in advance.

In Fig. 11, as in Fig. 10, the image 920 is an image captured by the camera 201 in a state where at least a portion of the aircraft being the subject is occluded (in the example illustrated in Fig. 11, a portion is occluded) by the obstruction 940 (i.e., a state where the obstruction 940 is within the screen of the camera 201). The tracking target detection unit 150 of the information processing apparatus 100 detects the plurality of object detection result regions 501 and 502 sandwiching the obstruction 940 from the image 920 as subject regions that are regions of the tracking target subject (aircraft). Further, at the time of acquisition of the image 920 illustrated in Fig. 11, the likelihood of the subject (aircraft) in the object detection result region 501 changes from high to low, and the likelihood of the subject (aircraft) in the object detection result region 502 changes from low to high. In other words, at the time of acquisition of the image 920 illustrated in Fig. 11, the likelihood of the subject (aircraft) in the object detection result region 502 is higher than the likelihood of the subject (aircraft) in the object detection result region 501. Then, for example, in a case where the likelihood of the subject (aircraft) in the object detection result region 501, which is the first subject region to which automatic tracking is being applied from the image 510, becomes less than or equal to the predetermined threshold (first threshold), the camera platform control unit 170 of the information processing apparatus 100 may perform the following process. In this case, for example, the camera platform control unit 170 switches from automatic tracking of the object detection result region 501 to automatic part tracking to track a subject part region among the object part detection result regions 701 to 704 detected at the time of acquisition of the image 510 illustrated in Fig. 11. The subject part region to which automatic part tracking is applied after the switch may be, for example, a single part, such as the object part detection result region 701, or a plurality of parts, such as the object part detection result regions 701 and 702. In this case, tracking of a plurality of parts can be conducted in a case where a plurality of object part detection result regions is detected for the tracking target subject. In this case, for example, a method may be employed in which the centroid position of the entire subject within the screen of the camera 201 is estimated based on the position of each of the plurality of tracking target parts and the plurality of tracking target parts is tracked.

Thereafter, in a case where the likelihood of the subject (aircraft) in the object detection result region 501 further decreases and becomes less than or equal to a second threshold, which is less than the predetermined threshold (first threshold), for example, the camera platform control unit 170 may perform the following process. In this case, the camera platform control unit 170 switches from automatic part tracking of the object part detection result region to automatic tracking of the object detection result region 502 (second subject region) detected by the tracking target detection unit 150 and differing from the object detection result region 501 and sets the object detection result region 502.

In Fig. 11, as in Fig. 10, the image 530 is an image captured by the camera 201 in a state where the obstruction 940 no longer occludes the aircraft being the subject following temporary occlusion of the aircraft (i.e., a state after the obstruction 940 is no longer within the screen of the camera 201 after passage). At the time of acquisition of the image 530 illustrated in Fig. 11, for example, the camera platform control unit 170 of the information processing apparatus 100 performs control to set the object detection result region 502 as the subject region of the tracking target subject and perform automatic tracking. Further, according to the present embodiment, the object part detection result regions 705 to 708 are detected at the time of acquisition of the image 530 illustrated in Fig. 11 to prepare for the next occlusion of the subject (aircraft) by a new obstruction. In other words, the tracking target detection unit 150 of the information processing apparatus 100 detects the object part detection result regions 705 to 708, which are subject part regions included at least partially in the object detection result region 502, in advance.

It should be noted that the object part detection result regions 701 to 708 illustrated in Fig. 11 may have a subject likelihood parameter when detected, and an object part detection result region with a likelihood greater than or equal to the predetermined threshold, among the object part detection result regions 701 to 708, may be output as a detection result region, like the object detection result regions.

Like the first and second embodiments, the third embodiment makes it possible to reduce loss of the tracking target subject even in a case where at least a portion of the tracking target subject is occluded by the obstruction 940 and a plurality of subject regions of the subject is detected. This makes it possible to continue automatic subject tracking with high accuracy.

### Other Embodiments

The present disclosure can also be realized by a process in which a program configured to realize one or more functions of the above-described embodiments is supplied to a system or apparatus via a network or storage medium and one or more processors of a computer of the system or apparatus read and execute the program. Further, the present disclosure can also be realized by a circuit (e.g., application-specific integrated circuit (ASIC)) configured to realize the one or more functions.

This program and a computer-readable storage medium that stores the program are included in the present disclosure.

It should be noted that the above-described embodiments of the present disclosure are mere examples implementations of the present disclosure and the technical scope of the present disclosure should not be construed as limited solely by these examples. In other words, the present disclosure can be implemented in various forms without departing from the spirit or essential feature thereof.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited solely to these embodiments and encompasses all modifications, variants, alternatives and equivalents falling within the scope of the appended claims. Each of the embodiments of the present disclosure described can be implemented solely or as a combination of a plurality of the embodiments or features thereof where necessary or where the combination of elements or features from individual embodiments in a single embodiment is beneficial.

## Claims

1. An information processing apparatus (100) comprising:
image acquisition means (140) for acquiring an image (510, 520, 530) including a subject, the image being acquired by imaging;
detection means (150) for detecting one or more subject regions (501, 502) from the image, the or each subject region being a region of the subject being a tracking target; and
setting means (170) for setting the subject region of the subject being the tracking target based on a likelihood of the subject in the subject region,
wherein in a case where at least a portion of the subject is occluded by an obstruction (540) in the image and a plurality of subject regions of the subject are detected by the detection means, the setting means sets a subject region from the plurality of subject regions based on the likelihood higher than the likelihood of other subject regions of the plurality of subject regions.

2. The information processing apparatus (100) according to claim 1, wherein the setting means (170) is configured to set the subject region with the highest likelihood among the plurality of subject regions of the subject detected by the detection means (150), as the subject region of the subject being the tracking target.

3. The information processing apparatus (100) according to claim 1 or claim 2, wherein in a case where the plurality of subject regions is detected by the detection means (150) and the likelihood of a first subject region that is included in the plurality of subject regions and to which tracking is being applied becomes less than or equal to a threshold, the setting means (170) is configured to switch the subject region of the subject being the tracking target from the first subject region to a second subject region included in the plurality of subject regions and having the likelihood greater than or equal to the threshold and configured to set the second subject region.

4. The information processing apparatus (100) according to claim 3, wherein in a case where the plurality of subject regions is detected by the detection means, the setting means (170) is configured to switch the subject region of the subject being the tracking target from the first subject region to the second subject region based on the likelihood and at least one of a degree of overlap with the first subject region and a degree of adjacency to the first subject region and configured to set the second subject region.

5. The information processing apparatus (100) according to any preceding claim,
wherein the detection means (150) is further configured to detect a subject part region, the subject part region being a region of a part of the subject included at least partially in the subject region, and
wherein in a case where the plurality of subject regions is detected by the detection means and the likelihood of a first subject region that is included in the plurality of subject regions and to which tracking is being applied becomes less than or equal to a threshold, the setting means (170) is configured to switch the subject region of the subject being the tracking target from the first subject region to the subject part region included at least partially in the first subject region and configured to set the subject part region.

6. The information processing apparatus (100) according to claim 5, wherein in a case where the likelihood of the first subject region becomes less than or equal to a second threshold, the second threshold being less than the threshold, while tracking is being applied to the subject part region, the setting means (170) is configured to switch the subject region of the subject being the tracking target from the first subject region to a second subject region included in the plurality of subject regions and differing from the first subject region and configured to set the second subject region.

7. The information processing apparatus (100) according to claim any preceding claim, wherein the detection means (150) is configured to perform object detection using artificial intelligence, Al, using a trained model to which the image is input and from which the subject region is output.

8. A method for controlling an information processing apparatus, the method comprising:
acquiring an image including a subject, the image being acquired by imaging the subject;
detecting one or more subject regions from the image, the or each subject region being a region of the subject being a tracking target; and
setting the subject region of the subject being the tracking target based on a likelihood of the subject in the subject region,
wherein in a case where at least a portion of the subject is occluded by an obstruction in the image and a plurality of subject regions of the subject are detected by the detecting, the setting means sets a subject region from the plurality of subject regions based on the likelihood being higher than the likelihood of other subject regions of the plurality of subject regions.

9. A program comprising instructions which, when executed by a computer, cause the computer to function as each means of the information processing apparatus according to any one of claims 1 to 7.

10. A program comprising instructions which, when executed by a computer, cause the computer to perform the method of claim 8.
